# EUROPÄISCHE PATENTSCHRIFT

(11) **EP 2 222 498 B1**
(45) Veröffentlichungstag und Bekanntmachung des Hinweises auf die Patenterteilung: **28.08.2013**
(21) Anmeldenummer: 08859500.4
(22) Anmeldetag: 15.10.2008
(51) Int. Cl.: B60N 2/02, B60N 2/06

(54) **GEWINDESPINDEL-VERSTELLANTRIEB**
THREADED SPINDLE ADJUSTMENT DRIVE
ENTRAÎNEMENT DE RÉGLAGE À BROCHE FILETÉE

(30) Priorität: 11.12.2007 DE 102007059558
(43) Veröffentlichungstag der Anmeldung: 01.09.2010
(73) Patentinhaber: Robert Bosch GmbH, 70442 Stuttgart (DE)
(72) Erfinder: OBERLE, Hans-Juergen, 76437 Rastatt (DE); LIENIG, Andreas, 77815 Buehl (DE)
(86) Internationale Anmeldenummer: PCT/EP2008/063815
(87) Internationale Veröffentlichungsnummer: WO 2009/074377

(56) Entgegenhaltungen:
- DE-A1-102004 042 457
- DE-A1-102005 046 356
- DE-A1-102005 046 357
- DE-A1-102006 006 925
- DE-A1-102006 020 174

## Beschreibung

### Stand der Technik

Die Erfindung betrifft einen Gewindespindel-Verstellantrieb gemäß dem Oberbegriff des Anspruchs 1.

Aus der DE 10 2005 046 356 A1 ist ein als Drehspindelantrieb ausgebildeter Gewindespindel-Verstellantrieb zum Verstellen eines beweglichen Teils in einem Kraftfahrzeug bekannt Der bekannte Verstellantrieb umfasst ein Radiallager zum Abstützen von auf ein als Schneckenrad ausgebildetes Antriebszahnrad wirkenden Radialkräften an einem Trägerrohr sowie ein Axiallager zum Abstützen von Axialkräften an einer Anlaufscheibe, die in einem topfförmigen Lagerschild aufgenommen ist, welches sich in axialer Richtung an einem am Trägerrohr festgelegten Aufnahmemodul abstützt. Sowohl das Lagerschild als auch die Anlaufscheibe sind aus Metall ausgebildet.

Aus der DE 10 2006 020174 A und DE 10 2005 046357 A ist ein Gewindespindel-Verstellantrieb mit einem kombinierten Axial-/Radiallager bekannt, welches ein einteiliges Lagerelement aus Metall aufweist, mit dem sowohl Axialkräfte als auch Radialkräfte an einem Mantelrohr abgestützt werden. Das Lagerelement stützt sich in radialer Richtung am Innenumfang des Mantelrohres und in axialer Richtung an radial nach innen gerichteten Verstemmungen des Mantelrohres ab. Nachteilig bei der einfachen Konstruktion ist das vergleichsvreise hohe Gewicht aufgrund der Ausbildung des Lagerelementes aus Metall, sowie die Schwierigkeit, enge Toleranzen bei der Herstellung sicher einhalten zu können.

### Offenbarung der Erfindung

### Technische Aufgabe

Der Erfindung liegt die Aufgabe zugrunde, einen Gewindespindel-Verstiellantrieb vorzuschlagen, dessen Lageranordnung zum einen einfach aufgebaut ist und zum anderen bei Bedarf auf einfache Weise in einer gewichtsreduzierten Variante herstellbar ist. Insbesondere sollen Toleranzen bei der Herstellung sicherer eingehalten werden können.

### Technische Lösung

Diese Aufgabe wird mit einem Gewindespindel-Verstellantrieb mit den Merkmalen des Anspruchs 1 gelöst. Vorteilhafte Weiterbildungen der Erfindung sind in den Unteransprüchen angegeben.

Der Erfindung liegt der Gedanke zugrunde, zum Abstützen der Axialkräfte und zum Abstützen der Radialkräfte am Mantelrohr zwei unterschiedliche Bauteile vorzusehen. Das Vorsehen zweier separater Bauteile, nämlich eines Axiallagerelementes und eines Radiallagerringes, ermöglicht es, die Bauteile aus unterschiedlichen Materialien auszubilden. Insbesondere ist es möglich, den Radiallagerring, wie später noch erläutert werden wird, aufgrund der zur Verfügung stehenden großen Abstützfläche und der daraus resultierenden geringen Flächenpressung aus Kunststoff auszubilden, ohne dass hierdurch Festigkeitseinbußen der gesamten Lageranordnung hingenommen werden müssten. Im Hinblick auf eine konstruktiv möglichst einfache und kostengünstige Ausbildung des Gewindespindel-Verstellantriebs stützt sich das Axiallagerelement unmittelbar an einem die Lageranordnung innen aufnehmenden Mantelrohr, insbesondere aus Metall, ab und zwar an zumindest einer radial nach innen gerichteten Verstemmung, vorzugsweise an mehreren in Umfangsrichtung voneinander beabstandeten, nach radial innen gerichteten, Verstemmungen des Mantelrohres. Da die Flächenpressung aufgrund der kleinen, von den Stirnseiten der Verstemmungen gebildeten, Abstützfläche besonders hoch ist, ist das Axiallagerelement aus Metall ausgebildet. Durch die Trennung des Axiallagerelementes von dem Radiallagerring werden die zum Herstellen der Verstemmungen einzusetzenden Verstemmkräfte von der Radiallagerung entkoppelt, so dass sich kein Einfluss der Verstemmkräfte auf den eng tolerierten Lagerdurchmesser ergibt. In der Folge können vorgegebene Toleranzen sicher eingehalten werden.

Das Axiallagerelement ist aufgrund der lediglich kleinen Abstützfläche am Mantelrohr bzw. an der mindestens einen Verstemmung des Mantelrohres aus Metall ausgebildet. Bevorzugt handelt es sich um ein gehärtetes Metall, vorzugsweise um gehärteten Stahl, damit eine ausreichende Festigkeit bei hohen Flächenpressungen gewährleistet ist. Gleichzeitig ist der Radiallagerring aus einem weniger festen Material, Kunststoff, ausgebildet, womit nicht nur eine Kostenreduzierung, sondern auch eine Gewichtsreduzierung, erreicht wird. Aufgrund der Trennung von Axiallagerelement und Radiallagerring wird also erreicht, dass nur dort, wo (unbedingt) erforderlich, hochwertige und schwere Werkstoffe eingesetzt werden. Von besonderem Vorteil ist eine Ausführungsform des Radiallagerrings, bei der dieser als Kunststoffspritzgussteil ausgebildet ist. Ein derartig ausgebildeter Radiallagerring ist nicht nur einfach und kostengünstig als Massenprodukt herstellbar, sondern ermöglicht zudem das Einhalten geringer Toleranzen.

Von besonderem Vorteil ist eine Ausführungsform, bei der das Axiallagerelement und der Radiallagerring axial aneinander anliegend angeordnet sind. Dabei ist eine Ausführungsform realisierbar, bei der die Axialkräfte von der Gewindespindel und/oder dem Antriebszahnrad nicht unmittelbar an dem Axiallagerelement abgestützt werden, sondern nur mittelbar. Bei einer derartigen Ausführungsform dient der Radiallagerring als Axialkraftübertragungselement, das sich in axialer Richtung an dem Axiallagerelement abstützt, welches wiederum an der mindestens einen Verstemmung des Mantelrohres unmittelbar anliegt.

Zum Herstellen des Axiallagerelementes bietet es sich an, dieses als Stanzteil aus Metall auszubilden. Bevorzugt handelt es sich bei dem Radiallagerring um ein Spritzgussteil aus einem thermoplastischen Kunststoff.

Von besonderem Vorteil ist eine Ausführungsform des Gewindespindel-Verstellantriebes als Drehspindelantrieb. Bei dieser Ausführungsform ist das, insbesondere als Schneckenrad ausgebildete, Antriebszahnrad entweder drehfest mit der Gewindespindel verbunden oder verbindbar oder einstückig mit der Gewindespindel ausgebildet, so dass das Antriebszahnrad ortsfest relativ zu der Gewindespindel angeordnet ist. Das direkt oder indirekt über ein Getriebe von einem, insbesondere elektrischen, Antriebsmotor angetriebene Antriebszahnrad treibt bei einer derartigen Ausbildung die Gewindespindel rotierend an, wobei auf der Gewindespindel, vorzugsweise mit Abstand zu dem Antriebszahnrad, eine Gewindemutter sitzt, die mit einem zu verstellenden Bauteil direkt oder indirekt, beispielsweise über ein Hebelgestänge, verbunden ist. Durch Verdrehen der Gewindespindel wird die Spindelmutter mit dem zu verstellenden Bauteil in axialer Richtung relativ zu der Gewindespindel verstellt. Bei einem als Drehspindelantrieb ausgebildeten Verstellantrieb ist eine Ausführungsform bevorzugt, bei der sich die Gewindespindel und/oder das Antriebszahnrad über eine, vorzugsweise auf der Längsmittelachse der Gewindespindel angeordnete, Kugel an dem Axiallagerelement in axialer Richtung abstützen/abstützt. Um diese im Wesentlichen punktförmige Flächenlast aufnehmen zu können, ist das Axiallagerelement vorzugsweise aus einem gehärteten Metall ausgebildet. Besonders bevorzugt ist an dem Antriebszahnrad oder einem drehfest mit diesem verbundenen Bauteil eine Lageraufnahme für die Kugel vorgesehen.

Besonders bevorzugt ist es, wenn das Axiallagerelement als, insbesondere kreisförmige, Scheibe ausgebildet ist. Dabei entspricht der Außendurchmesser des Axiallagerelementes vorzugsweise, zumindest näherungsweise, dem Außendurchmesser des Radiallagerrings, um eine Anordnung innerhalb des Mantelrohres zu ermöglichen. Das Axiallagerelement stützt sich mit der von der Gewindespindel abgewandten Stirnseite bevorzugt an mehreren in Umfangsrichtung beabstandeten Verstemmungen des Mantelrohres in axialer Richtung ab.

Gemäß einer alternativen bevorzugten Ausführungsform ist der Gewindespindel-Verstellantrieb als Tauchspindelantrieb ausgeführt, also als ein Verstellantrieb, bei dem die Gewindespindel das Antriebszahnrad, welches vorzugsweise direkt von einem elektrischen Antriebsmotor angetrieben wird, in axialer Richtung durchsetzt. Die Gewindespindel ist bevorzugt an einem Ende drehfest gelagert, wobei sich durch Verdrehen des Antriebszahnrades diese sich in axialer Richtung relativ zum Antriebszahnrad bewegt. Mit der Gewindespindel bewegt sich dabei ein zu verstellendes Bauteil, welches mit der Gewindespindel gekoppelt ist. Der Antriebsmotor mit Mantelrohr sowie das Schneckenrad sind im System relativ zur Drehachse der Gewindespindel drehfest fixiert, wobei die Befestigungsbohrung im Mantelrohr ein Kippen des Antriebsmotors mit der Gewindespindel um eine Befestigungsbohrungsachse, d. h. einen Winkelausgleich, zulässt.

Bei einem als Tauchspindelantrieb ausgebildeten Gewindespindel-Verstellantrieb ist das Axiallagerelement bevorzugt ringförmig ausgebildet und wird in axialer Richtung von der Gewindespindel durchsetzt.

Besonders bevorzugt ist es, wenn sich das ringförmige Axiallagerelement nicht unmittelbar am Antriebszahnrad abstützt, sondern nur mittelbar über den Radiallagerring, welcher bevorzugt an dem Antriebszahnrad in axialer Richtung, vorzugsweise an einer Ringschulter des Antriebszahnrades, anliegt.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1:: einen als Drehspindelantrieb ausgebildeten Gewindespindel-Verstellantrieb zum Verstellen eines Kraftfahrzeugteils und
- Fig. 2:: einen als Tauchspindelantrieb ausgebildeten Gewindespindel-Verstellantrieb zum Verstellen eines Kraftfahrzeugbauteils.

### Ausführungsformen der Erfindung

In den Figuren sind gleiche Bauteile und Bauteile mit der gleichen Funktion mit den gleichen Bezugszeichen gekennzeichnet.

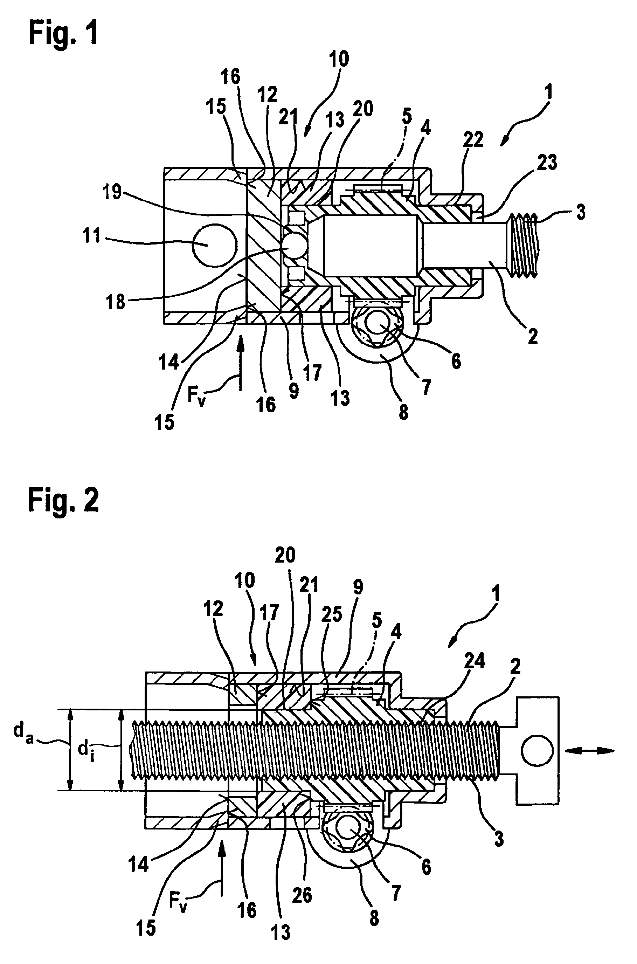

In Fig. 1 ist ein als Drehspindelantrieb ausgebildeter Gewindespindel-Verstellantrieb 1, hier ein Kraftfahrzeugsitzverstellantrieb, gezeigt. Der Gewindespindel-Verstellantrieb 1 umfasst eine Gewindespindel 2 mit einem Außengewinde 3, mit dem eine nicht gezeigte, mit einem zu verstellenden Bauteil verbundene, Spindelmutter kämmt. Durch Rotieren der Gewindespindel 2 wird die Spindelmutter mit dem zu verstellenden Fahrzeugteil axial relativ zu der Gewindespindel 2 verstellt.

Drehfest mit der Gewindespindel 2 ist ein als Schneckenrad ausgebildetes Antriebszahnrad 4 verbunden, dessen Schneckenverzahnung 5 mit einer Gewindeschnecke 6 kämmt, die auf einer Motorwelle 7 eines elektrischen Antriebsmotors 8 sitzt. Die Motorwelle 7 verläuft dabei senkrecht zur Längserstreckung der Gewindespindel 2.

Während des Betriebs des Verstellantriebs 1 wirken auf das Antriebszahnrad 4 Kräfte sowohl in radialer Richtung als auch in axialer Richtung. Zum Abstützen der auf die Gewindespindel 2 und/oder das Antriebszahnrad 4 wirkenden Axialund Radialkräfte an einem Mantelrohr 9 ist eine Lageranordnung 10 vorgesehen. Das Mantelrohr 9 weist eine Durchgangsöffnung 11 mit einem kreisrunden Querschnitt auf, die das Mantelrohr 9 mit Axialabstand zur Gewindespindel 2 in Querrichtung vollständig durchsetzt. Die Durchgangsöffnung 11 dient zur drehfesten Fixierung des Mantelrohres 9 in einem Gehäuse und/oder an der Fahrzeugkarosserie (nicht gezeigt). Das Mantelrohr kann sich dabei jedoch um die Achse der Durchgangsöffnung 11 neigen.

Die Lageranordnung 10 umfasst ein Axiallagerelement 12 sowie einen in axialer Richtung an diesem anliegenden Radiallagerring 13. Das Axiallagerelement 12 und der Radiallagerring 13 sind als separate Bauteile ausgebildet.

Das Axiallagerelement 12 ist als kreisringförmig konturierte Scheibe aus einem gehärteten Stahl ausgebildet und stützt sich in axialer Richtung in der Zeichnungsebene nach links mit einer von der Gewindespindel 2 abgewandten Stirnseite 14 an mehreren, in Umfangsrichtung beabstandeten, nach radial innen weisenden, Verstemmungen 15 des Mantelrohres 9 ab. Genauer gesagt stützt sich die Stirnseite 14 an den der Stirnseite 14 zugewandten Stirnseiten 16 der Verstemmungen 15 ab. Die Verstemmungen 15 sind als nach radial innen gerichtete Mantelflächenabschnitte des Mantelrohres 9 ausgebildet, die durch Aufbringen einer von radial außen nach radial innen auf das Mantelrohr 9 gerichteten Verstemmkraft Fᵥ in das Mantelrohr 9 eingebracht wurden. Bei dem Ausführungsbeispiel gemäß Fig. 1 ist das scheibenförmige Axiallagerelement 12 als Stanzteil ausgebildet, welches eine zur Stirnseite 14 parallele, der Gewindespindel 2 zugewandte, Stirnseite 17 aufweist.

An der Stirnseite 17 des Axiallagerelementes 12 stützen sich zentrisch in axialer Richtung die Gewindespindel 2 sowie das Antriebszahnrad 4 mittels einer Kugel 18 ab. Die aus Stahl bestehende Kugel 18 ist in einer Lageraufnahme 19 aufgenommen, die stirnseitig an dem als Spritzgussteil ausgebildeten Antriebszahnrad 4 angeordnet ist. Alternativ kann die Kugel 18 auch in einer Bohrung der Spindel aufgenommen und z. B. durch Verstemmen fixiert werden. Mit Radialabstand zu der Kugel 18 stützt sich das Antriebszahnrad 4 mit einem Umfangsabschnitt 20 an dem Radiallagerring 13 ab. Dieser liegt wiederum am Innenumfang 21 des Mantelrohres 9 an und stützt die auf das Antriebszahnrad 4 wirkenden Radialkräfte am Mantelrohr 9 ab. In dem gezeigten Ausführungsbeispiel ist der Radiallagerring 13 als Kunststoff-Spritzgussteil ausgebildet. Insgesamt werden hierdurch etwa 25g Gewicht gegenüber einer Ausführungsform eingespart, bei der das Axiallagerelement 12 und der Radiallagerring 13 als einstückiges Metallbauteil ausgebildet sind. Auf der dem Radiallagerring 13 gegenüberliegenden Seite der Schneckenverzahnung 5 des Antriebszahnrades 4 stützt sich das Antriebszahnrad 4 in radialer Richtung mit einem weiteren Umfangsabschnitt 22 unmittelbar an einem abgestuften Innenumfang des Mantelrohres 9 ab. Im Mantelrohr 9 ist in der in der Zeichnungsebene rechten Seite eine Durchgangsöffnung 23 eingebracht, durch die die Gewindespindel 2 mit einem gewindefreien Abschnitt in das Mantelrohr 9 hineinragt.

In Fig. 2 ist ein alternatives Ausführungsbeispiel eines Gewindespindel-Verstellantriebes 1 gezeigt. Dieser ist in dem Ausführungsbeispiel gemäß Fig. 2 als Tauchspindelantrieb ausgebildet. Zur Vermeidung von Wiederholungen wird im Folgenden lediglich auf die Unterschiede zu dem Ausführungsbeispiel gemäß Fig. 1 eingegangen. Im Hinblick auf die Gemeinsamkeiten wird auf Fig. 1 mit zugehöriger Figurenbeschreibung verwiesen.

Bei dem Verstellantrieb 1 gemäß Fig. 2 wird das Antriebszahnrad 4 in axialer Richtung von der Gewindespindel 2, genauer von einem Außengewindeabschnitt der Gewindespindel 2, durchsetzt. Das ortsfeste Antriebszahnrad 4 weist ein Innengewinde 24 auf, das mit dem Außengewinde 3 der Gewindespindel 2 kämmt. Wird das als Schneckenrad ausgebildete Antriebszahnrad 4 von dem ortsfesten Antriebsmotor 8 über die Motorwelle 7 und die Gewindeschnecke 6 rotierend angetrieben, wird die Gewindespindel 2 aufgrund der Gewindekopplung mit dem Antriebszahnrad 4 in axialer Richtung relativ zu dem Antriebszahnrad 4 verstellt. Mit der Gewindespindel 2 wird auch ein endseitig an dieser festgelegtes Fahrzeugbauteil (nicht gezeigt) relativ zu dem Antriebsmotor 8 verstellt.

Die Lageranordnung 10 zum Abstützen von Axial- und Radialkräften umfasst ein in diesem Ausführungsbeispiel ringförmiges Axiallagerelement 12 aus einem gehärteten Stahl. Das Axiallagerelement 12 liegt mit seiner von dem Antriebszahnrad 4 abgewandten Stirnseite 14 unmittelbar an in Umfangsrichtung beabstandeten Verstemmungen 15 des Mantelrohres 9 bzw. an deren Stirnseiten 16 an und stützt somit axiale Kräfte unmittelbar am Mantelrohr 9 ab. Der Außendurchmesser des Axiallagerelementes 12 entspricht, wie bei dem Ausführungsbeispiel gemäß Fig. 1, dem Außendurchmesser des Radiallagerrings 13. Der Radiallagerring 13 stützt sich an der von der Stirnseite 14 abgewandten Stirnseite 17 des Axiallagerelementes 12 ab. Der Radiallagerring 13 wiederum liegt zum einen mit seiner äußeren Mantelfläche am Innenumfang 21 des Mantelrohres 9 an und mit seiner inneren Umfangsfläche an einem Umfangsabschnitt 20 des Antriebszahnrades 4, wobei der Umfangsabschnitt 20 in axialer Richtung in den Radiallagerring 13 hineinragt.

Wie aus Fig. 2 zu erkennen ist, ist die Radialerstreckung des Radiallagerrings 13, der in dem gezeigten Ausführungsbeispiel aus Kunststoff ausgebildet ist, größer als die Radialerstreckung des Axiallagerelementes 12. Mit einer von dem Axiallagerelement 12 abgewandten, stirnseitigen Ringfläche 25 stützt sich der Radiallagerring 13 in axialer Richtung an einer Ringschulter 26 des Antriebszahnrades 4 ab. Der Innendurchmesser dᵢ des Radiallagerrings 13 sowie der korrespondierende Außendurchmesser dₐ des Umfangsabschnittes 20 sind so gewählt, dass die Ringfläche 25, mit der sich der Radiallagerring 13 in axialer Richtung an dem Antriebsrad 4 abstützt, ausreichend groß ist, so dass eine maximale Flächenpressung des aus Kunststoff bestehenden Radiallagerrings 13 nicht überschritten wird. Die über die Ringfläche 25 an dem Radiallagerring 13 abgestützten Axialkräfte werden über die gesamte Querschnittsfläche des Axiallagerelementes 12 an dieses weitergegeben, so dass auch hier die maximal zulässige Flächenpressung für den Radiallagerring 13 nicht überschritten wird. Die eigentliche Mantelrohrabstützung übernimmt dann das als Axiallagerring ausgebildete, gehärtete Axiallagerelement 12.

## Patentansprüche

1. Gewindespindel-Verstellantrieb, insbesondere Fahrzeugsitzverstellantrieb, mit einer Gewindespindel (2) und mit einem mit der Gewindespindel (2) wirkverbundenen Antriebszahnrad (4) in einem Mantelrohr (9) und mit einer Lageranordnung (10) zum Abstützen von Axial und Radialkräften von der Gewindespindel (2) und/oder dem Antriebszahnrad (4) an dem Mantelrohr (9), **wobei** die Lageranordnung (10) ein an mindestens einer radial nach innen gerichteten Verstemmung (15) des Mantelrohres (9) anliegendes Axiallagerelement (12) zum Abstützen von Axialkräften und einen am Innenumfang (21) des Mantelrohres (9) anliegenden Radiallagerring (13) zum Abstützen von Radialkräften aufweist,
**dadurch gekennzeichnet,**
**dass das Axiallagerelement (12) aus Metall und der Radiallagerring (13) aus Kunststoff ausgebildet ist, wobei das Axiallagerelement (12) und der Radiallagerring (13) als zwei separate Bauteile ausgebildet sind.**

2. **Verstellantrieb nach Anspruch 1,**
**dadurch gekennzeichnet,**
**dass das Axiallagerelement (12) aus gehärtetem Metall und/oder der Radiallagerring (13) als Spritzgussteil ausgebildet ist**

3. Verstellantrieb nach einem der Ansprüche 1 oder 2,
**dadurch gekennzeichnet,**
**dass** das Axiallagerelement (12) und der Radiallagering (13) axial aneinander anliegend angeordnet sind.

4. Verstellantrieb nach einem der vorhergehenden Ansprüche,
**dadurch gekennzeichnet,**
**dass** das Axiallagerelement (12) und der Verstellantrieb (1) als Drehspindelantrieb ausgebildet sind, bei dem die Gewindespindel (2) und das Antriebszahnrad (4) ortsfest relativ zueinander angeordnet sind.

5. Verstellantrieb nach Ansprunch 4,
**dadurch gekennzeichnet,**
**dass** sich die Getriebespindel und/oder das Antriebszahnrad (4) über eine Kugel (18) an dem Axiallagerelement (12) abstützend angeordnet sind.

6. Verstellantrieb nach einem der Ansprüche 4 oder 5.
**dadurch gekennzeichnet**
**dass** das Axiallagerelement (12) scheibenförmig ausgebildet ist, vorzugsweise mit einem Außendurchmesser, der, zumindest näherungsweise, dem Außendurchmesser des Radiallagerrings (13) entspricht.

7. Verstellantrieb nach einem der Ansprüche 1 bis 3, **dadurch gekennzeichnet,**
**dass** der Verstellantrieb (1) als Tauchspindelantrieb ausgebildet ist, bei dem die Gewindespindel (2) das axial relativ zu der Gewindespindel (2) verstellbare Antnebszahnrad (4) in axialer Richtung durchsetzt.

8. Verstellantrieb nach Anspruch 7,
**dadurch gekennzeichnet,**
**dass** das Axiallagerelement (12) ringförmig, insbesondere mit der Innenkontur des Mantelrohrs (9) korrespondierend, ausgebildet ist.

9. Verstellantrieb nach einem der Ansprüche 7 oder 8, **dadurch gekennzeichnet,**
**dass** sich das **Antriebszahnrad (4)** mit einer Ringschulter (26) axial an dem Radiallagerring (13) abstützend angeordnet ist.

## Claims

1. Threaded spindle adjustment drive, in particular vehicle seat adjustment drive, having a threaded spindle (2) and having a drive gearwheel (4) which is operatively connected to the threaded spindle (2) and which is situated in a casing tube (9) and having a bearing arrangement (10) for the support of axial and radial forces from the threaded spindle (2) and/or from the drive gearwheel (4) on the casing tube (9), wherein the bearing arrangement (10) has an axial bearing element (12), which bears against at least one radially inwardly directed calked portion (15) of the casing tube (9), for the support of axial forces, and a radial bearing ring (13), which bears against the inner circumference (21) of the casing tube (9), for the support of radial forces,
**characterized**
**in that** the axial bearing element (12) is formed from metal and the radial bearing ring (13) is formed from plastic, wherein the axial bearing element (12) and the radial bearing ring (13) are formed as two separate components.

2. Adjustment drive according to Claim 1,
**characterized**
**in that** the axial bearing element (12) is formed from hardened metal and/or the radial bearing ring (13) is formed as an injection-moulded part.

3. Adjustment drive according to either of Claims 1 and 2,
**characterized**
**in that** the axial bearing element (12) and the radial bearing ring (13) are arranged so as to bear axially against one another.

4. Adjustment drive according to one of the preceding claims,
**characterized**
**in that** the axial bearing element (12) and the adjustment drive (1) are formed as a rotary spindle drive, in which the threaded spindle (2) and the drive gearwheel (4) are arranged so as to be positionally fixed relative to one another.

5. Adjustment drive according to Claim 4, **characterized**
**in that** the threaded spindle and/or the drive gearwheel (4) are arranged so as to be supported on the axial bearing element (12) via a ball (18).

6. Adjustment drive according to either of Claims 4 and 5,
**characterized**
**in that** the axial bearing element (12) is of discshaped design, preferably with an outer diameter which corresponds at least approximately to the outer diameter of the radial bearing ring (13).

7. Adjustment drive according to one of Claims 1 to 3,
**characterized**
**in that** the adjustment drive (1) is in the form of a plunger spindle drive in which the threaded spindle (2) extends in an axial direction through the drive gearwheel (4) which is axially adjustable relative to the threaded spindle (2).

8. Adjustment drive according to Claim 7,
**characterized**
**in that** the axial bearing element (12) is of annular form, in particular is formed correspondingly to the inner contour of the casing tube (9).

9. Adjustment drive according to either of Claims 7 and 8,
**characterized**
**in that** the drive gearwheel (4) is arranged so as to be supported by way of an annular shoulder (26) axially against the radial bearing ring (13).

## Revendications

1. Entraînement de réglage à broche filetée, en particulier entraînement de réglage de siège de véhicule, comprenant une broche filetée (2) et une roue dentée d'entraînement (4) en liaison fonctionnelle avec la broche filetée (2) dans un tube d'enveloppe (9) et un agencement de palier (10) pour supporter des forces axiales et radiales appliquées par la broche filetée (2) et/ou la roue dentée d'entraînement (4) sur le tube d'enveloppe (9), l'agencement de palier (10) présentant un élément de palier axial (12) s'appliquant sur au moins un matage (15) orienté radialement vers l'intérieur du tube d'enveloppe (9) en vue de supporter les forces axiales et une bague de palier radial (13) s'appliquant sur la périphérie interne (21) du tube d'enveloppe (9) en vue de supporter les forces radiales,
**caractérisé en ce que**
l'élément de palier axial (12) est réalisé en métal et la bague de palier radial (13) est réalisée en plastique, l'élément de palier axial (12) et la bague de palier radial (13) étant réalisés sous forme de deux composants séparés.

2. Entraînement de réglage selon la revendication 1,
**caractérisé en ce que**
l'élément de palier axial (12) est réalisé en métal trempé et/ou la bague de palier radial (13) est réalisée sous forme de pièce moulée par injection.

3. Entraînement de réglage selon l'une quelconque des revendications 1 ou 2,
**caractérisé en ce que**
l'élément de palier axial (12) et la bague de palier radial (13) sont disposés en appui axial l'un contre l'autre.

4. Entraînement de réglage selon l'une quelconque des revendications précédentes,
**caractérisé en ce que**
l'élément de palier axial (12) et l'entraînement de réglage (1) sont réalisés sous forme d'entraînement à broche rotative, dans lequel la broche filetée (2) et la roue dentée d'entraînement (4) sont disposées fixement l'une par rapport à l'autre.

5. Entraînement de réglage selon la revendication 4,
**caractérisé en ce que**
la broche filetée et/ou la roue dentée d'entraînement (4) sont disposées en s'appuyant par le biais d'une bille (18) sur l'élément de palier axial (12).

6. Entraînement de réglage selon l'une quelconque des revendications 4 ou 5,
**caractérisé en ce que**
l'élément de palier axial (12) est réalisé en forme de disque, de préférence avec un diamètre extérieur qui correspond au moins approximativement au diamètre extérieur de la bague de palier radial (13).

7. Entraînement de réglage selon l'une quelconque des revendications 1 à 3,
**caractérisé en ce que**
l'entraînement de réglage (1) est réalisé sous forme d'entraînement à broche plongeante, dans lequel la broche filetée (2) traverse la roue dentée d'entraînement (4) réglable axialement par rapport à la broche filetée (2) dans la direction axiale.

8. Entraînement de réglage selon la revendication 7,
**caractérisé en ce que**
l'élément de palier axial (12) est réalisé sous forme annulaire, en particulier de manière à correspondre au contour interne du tube d'enveloppe (9).

9. Entraînement de réglage selon l'une quelconque des revendications 7 ou 8,
**caractérisé en ce que**
la roue dentée d'entraînement (4) est disposée avec un épaulement annulaire (26) en s'appuyant axialement sur la bague de palier radial (13).
